# EUROPEAN PATENT APPLICATION

(11) **EP 0 774 397 A1**
(43) Date of publication of application: **21.05.1997**
(21) Application number: 96308111.2
(22) Date of filing: 08.11.1996
(51) Int. Cl.: B62B 3/14

(54) **Shopping trolley**

(30) Priority: 20.11.1995 GB 9523682
(71) Applicant: Clares Merchandise Handling Equipment Limited, Wells, Somerset BS16 3EP (GB)
(72) Inventor: Basharat, Abdul Majid, Fishponds, Bristol BS16 3EP (GB)
(74) Representative: Brown, Kenneth Richard

(57) **Abstract**

A stowable child seat provided in the trolley basket includes a pivoted seat panel (4) which can be swung out from the horizontal seating position to open up a storage compartment (7) beneath the seat. The compartment is preferably divided by a further panel (5) having a plurality of apertures each for receiving and supporting a wine bottle (8). The arrangement provides a safe and convenient way of storing wine in a shopping trolley.

## Description

This invention relates to a shopping trolley having a basket for holding items to be conveyed.

Such a trolley is commonly provided with a seat for a young child at the rear of the basket. The seat comprises a seating frame which in use is supported horizontally between the rear panel of the basket and a forwardly-inclined support panel secured to the rear panel. The support panel is hinged at the bottom to the rear panel, the rear of the seating frame being hinged to the rear panel and the front thereof slidably coupled to the support panel. This arrangement enables the seat to be folded up flat with the rear panel when not required. The seat is opened up for use by swinging the top of the support panel in the forward direction to lower or raise the seating frame to the horizontal position. If the seating frame, like the rear and support panels, is of wire construction, a moulded plastic seat is normally provided on the frame for greater comfort. The child sits on the plastic seat, facing rearwardly with his back against the support panel and legs poked through a couple of holes in the rear panel.

The present invention arose from a realisation that such a child seat structure may alternatively serve to provide a practically ready-made storage compartment. Although the users of such trolleys sometimes use the seat as a shelf for resting a handbag, for example, it has not previously been proposed to use the wasted space beneath the seat for storage purposes.

In one aspect, the invention provides a shopping trolley comprising a basket having a child seat, characterised in that the seat is adapted for the storage of bottles.

In another aspect, the invention provides a shopping trolley comprising a basket having a child seat, characterised in that a seat platform includes means displaceable to open up a storage space beneath the seat platform.

In a preferred embodiment, the storage space is divided by a panel having a plurality of apertures each for receiving a bottle, such as a wine bottle.

The child seat may be stowable, like the conventional one, when neither the seat nor the storage space is required, although this feature is not essential to the invention.

According to the invention, a particularly convenient and safe way of storing wine in the shopping trolley is realised.

An embodiment of the invention will now be described by way of example only with reference to the accompanying drawings, in which:
Fig. 1 is a perspective view of a child seat assembly in accordance with the invention;
Fig. 2 is a side view of the assembly of Fig. 1, illustrating the storage of wine;
Fig. 3 is a view of the seat platform arrangement in the direction of arrow C in Fig. 2;
Fig. 4 is a view of a rear panel of the assembly in the direction of arrow B in Fig. 2; and
Fig. 5 is a view of a support panel of the assembly in the direction of arrow A in Fig. 2.

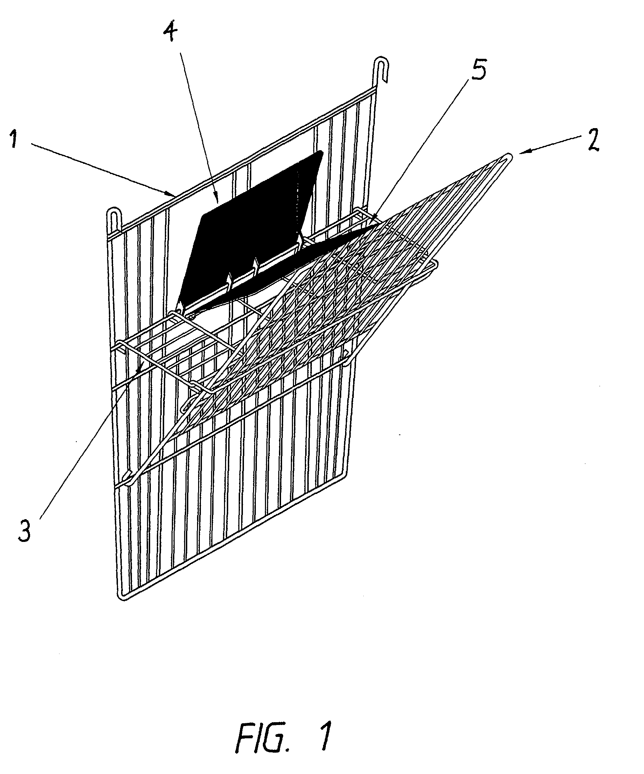

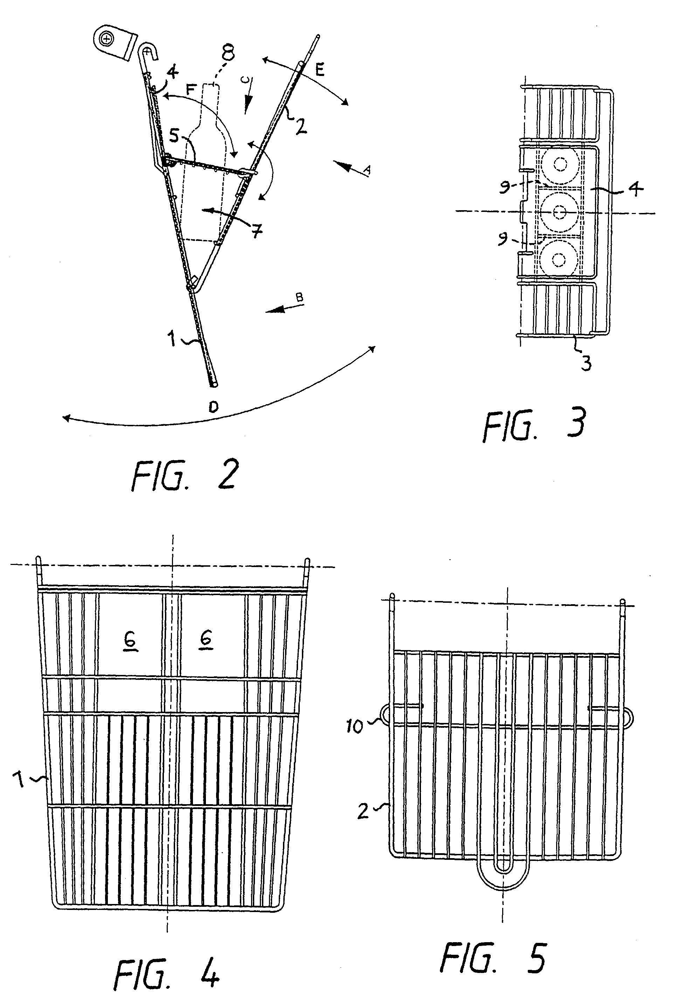

Referring to the drawings, Fig. 1 shows a child seat assembly to be provided on a shopping trolley in accordance with the embodiment of the invention. Apart from this assembly, the shopping trolley is conventional and will therefore not be further described. The assembly comprises a rear panel 1, a support panel 2 and a seat frame 3. The rear panel 1 constitutes the rear wall of the trolley basket and, in this embodiment, the top of the panel is pivotally mounted on the trolley structure to enable nesting of a number of trolleys in a manner well-known in the art. The rear panel pivots to realise a movement in the direction of the arrows D in Fig. 2.

The support panel 2 is pivotally mounted at the bottom to the rear panel 1. The seat frame 3 is pivotally mounted at its rearmost edge to the rear panel 3, whereas its foremost edge is slidably coupled to the support panel 2 so as to enable the frame to ride up and down a portion of the length of the support panel. A stop 10 (Fig. 5) provided on the support panel arrests the downward motion of the frame when the latter reaches a horizontal position. With this arrangement the seat can be stowed substantially flat with the rear panel when not in use. The support panel is moved in the direction of the arrows E in Fig. 2 to open or close the seat.

In accordance with this embodiment, the seat platform further comprises, in addition to the wire frame 3, a moulded plastic seat panel 4. The seat panel 4 is pivotally mounted on the rear panel so as to be locatable on the frame 3 when the seat is to be used. Alternatively, the seat panel may be pivotally mounted on the frame 3 for this purpose. On the other hand, when the seat is not required the panel 4 may be swung up to a position substantially in the plane of the rear panel 1. The direction of movement is indicated by the arrows F in Fig. 2, where the panel 4 is shown in such a position. In this position, the panel 4 preferably closes off the leg-holes 6 (Fig. 4) in the rear panel. By lifting up the seat panel 4 in this way, access is gained, through the frame 3, to a wedge-shaped compartment 7 beneath the seat platform. The compartment 7 is defined by the rear panel 1 and the support panel 2.

In this embodiment, it is intended to use the space of the compartment 7 for the holding of one or more bottles of wine 8. As shown in Fig. 2, a wine bottle may be inserted through the frame 3, its base then being securely located in the narrower width of the compartment towards the bottom of the wedge. In order to further support the wine bottles vertically, the frame 3 preferably includes a plurality of laterally-spaced dividing wires 9, as shown in Fig. 3 and also visible in Fig. 1. Alternatively, or additionally, a dividing panel 5 of moulded plastic may be provided, as illustrated schematically in Fig. 1. The dividing panel 5 includes a plurality of apertures (not shown), suitably of circular form and each adapted for receiving and supporting the body of a bottle. The panel 5 may be pivotally mounted, like the seat panel 4, or permanently secured or integral to the frame 3.

The invention may be embodied in other specific forms without departure from the scope thereof. For example, the seat is not essentially stowable nor is it limited to being provided at the rear of the trolley. The compartment 7 may be used for storing items other than bottles, in which case the division of the compartment may be different or not necessary at all. In the described embodiment, the support panel extends the full width of the basket. The frame 3 may be adapted to permit access to the compartment 7 across its full width. Alternatively, the support panel and/or the compartment may be limited to the width of the seat.

## Claims

1. A shopping trolley comprising a basket having a child seat, characterised in that the seat is adapted for the storage of bottles.

2. A shopping trolley comprising a basket having a child seat, characterised in that a seat platform comprises means displaceable to permit access to a storage compartment beneath the seat platform.

3. A shopping trolley according to claim 2, wherein the seat platform is supported by a panel of the basket and a support panel coupled to the basket panel, the two panels defining said compartment.

4. A shopping trolley according to claim 3, wherein the seat platform comprises a frame coupled to the basket panel and the support panel, and the displaceable means comprises a panel adapted to locate on the frame to provide a seat.

5. A shopping trolley according to claim 4, wherein the seat panel is pivotally mounted on the frame or the basket panel.

6. A shopping trolley according to claim 5, wherein the seat panel is displaceable to a position substantially in the plane of the basket panel.

7. A shopping trolley according to any preceding claim, wherein the seat includes means for dividing the storage space.

8. A shopping trolley according to claim 7, as appendant to any of claims 4 to 6, wherein the dividing means is provided in said frame.

9. A shopping trolley according to claim 7 or claim 8, wherein the dividing means comprises a dividing panel.

10. A shopping trolley according to claim 9, wherein said dividing panel comprises a plurality of apertures, each for receiving and supporting a bottle.

11. A shopping trolley according to any preceding claim, wherein the seat is adapted to be stowed substantially flat with the wall of the basket when neither the seat nor the storage space is required.
